# EUROPEAN PATENT APPLICATION

(11) **EP 2 478 947 A1**
(43) Date of publication of application: **25.07.2012**
(21) Application number: 10849094.7
(22) Date of filing: 18.06.2010
(51) Int. Cl.: B01D 27/00, B01D 39/16, A01J 11/06

(54) **FILTER ELEMENT FOR FINE PURIFICATION OF RAW MILK**

(30) Priority: 02.04.2010 RU 2010112777
(71) Applicant: Verholomov, Evgenij Ivanovich, Voronezh 394070 (RU); Jushenko, Svetlana Viktorovna, Voronezh (RU)
(72) Inventor: Verholomov, Evgenij Ivanovich, Voronezh 394070 (RU); Jushenko, Svetlana Viktorovna, Voronezh (RU)
(74) Representative: Engel, Christoph Klaus
(86) International application number: PCT/RU2010/000335
(87) International publication number: WO 2011/122976

(57) **Abstract**

The present invention relates to separation of liquids and gases, more particularly, to disposable cartridge-type filters for purification of milk products. The filter element for fine purification of raw milk is configured as a tubular cartridge made from a food-grade polymeric material. It is formed by discrete rows of aerodynamically extruded fibers whose pore size decreases radially from the periphery towards the center. Each row comprises frame fibers and filter fibers. The filter fibers are thicker than the frame fibers. The invention makes it possible to improve the quality of purification of milk products.

## Description

The present invention relates to separation of liquids and gases, more particularly, to disposable cartridge-type filters for purification of milk products.

In order to obtain high-quality products, all kinds of mechanical contaminants comprising both solid and plastic bodies, as well as bunches of slime have to be removed from milk. The complexity of this task consists in that milk is a multi-component substance which, being in fact a liquid, contains both useful constituents (milk fat "globules") and harmful ones. Said harmful constituents of raw milk are also non-uniform. These may comprise large grains of sand, stones, pats of feedstuff, straw, etc., and also finest soil and manure grains (dust) which upon dissolution in milk bear a serious bacteriological load. On the other hand, raw milk is also contaminated with bunches slime which is formed in animals due to various diseases.

Known in the art is a filter element for fine purification of raw milk, configured as a tubular cartridge made from a food-grade polymeric material formed by discrete rows of aerodynamically extruded fibers whose pore size decreases radially from the periphery towards the center (RU 53585, B01D 27/08, 27.05.2006). The disadvantage of this prior art device is that fine-dispersed contaminants cannot be removed from milk. Filtration is performed according to the following principle: if a particles size is less than that of the filter element transmission channel, such particle is allowed to pass, otherwise it is retained. Such kind of devices are used to purify raw milk only of contaminants having a larger size than that of a milk fat "globule" whereas smaller size contaminants are allowed to penetrate into filtered raw milk and inseminate the same.

It is an object of the invention to overcome said disadvantage. The technical effect consists in a higher quality of purification.

Said object is achieved by means of a filter element for fine purification of raw milk configured as a tubular cartridge made from a food-grade polymeric material formed by discrete rows of aerodynamically extruded fibers whose pore size decreases radially from the periphery towards the center, wherein each row comprises frame fibers and filter fibers, said filter fibers being thicker than said frame fibers.

The inventive device comprises a rigid polymeric cylinder which is aerodynamically extruded from 01030 food-grade polypropylene. The main advantage of this material consists in its resistance to aggressive environments, as well as its ability of spinning resulting in filaments with a thickness of 0.01-0.02 mm at a melting temperature of 195°C. The aerodynamic extrusion method allows the sizes of transmission channels to be varied by increasing the same from the periphery towards the center.

The inventive filter element is distinguished from the prior art in that in the manufacture of the same layers are discretely added with the polymeric fibers of non-uniform thickness being present in the same row. Thin filaments strongly pressed to each other form a filter frame which allows the filter element geometry to be maintained under a pressure and filters out coarse contaminants. Moreover, thicker filaments form a filter body for removing fine dissolved dirt which partially concentrates under the influence of centrifugal force. This feature provides for achieving effective removal of coarse and fine contaminants from milk along with unhampered passage of massive milk fat globules through the filter. The resulting filter element is non-uniform and has the transmission channels gradually widening from the periphery towards the center and the discretely varying layers which cause disturbance in the flow of raw milk passing through the filter element to thereby still further improve the quality of filtration.

The filter element is produced using a shopfloor machine comprising and extruder and a slide in the following manner.

A measuring hopper of an extruder is filled with polypropylene granules which by means of a screw are fed to the melting chambers consisting of two stages. At a first stage, the feed material is comminuted and melted till viscous state. Then, at a second stage, polypropylene is further melted till fluid but not boiling state to obtain a plastic uniform mixture which is fed by means of the screw to the aerodynamic extruding head. The screw is shaped as a spindle tapered at the beginning and widened at the end. It is only with this screw configuration that the required pressure of melted polypropylene may be achieved at the die outlet.

Warmed-up swirling air is supplied to the aerodynamic extruding head for blowing the melted polypropylene mass delivered by the screw into a ring. The delivery temperature of the melt should be maintained at 175°C. At a higher temperature the layers would weld together, and at a lower temperature the layers would separate, the ring would contract and the filaments would thicken. The optimum ring has a diameter of 6-8 cm and is spaced at 18-20 cm apart from the die. The air pressure on the polypropylene melt is maintained at 0.3 kg/cm². At a lower pressure the resulting fine milk filter is soft, light and porous, and at a higher pressure - hard, dense and heavy.

The aerodynamic force causes the filament to twine into a ring for winding around a mandrel. The mandrel is mounted on the slide and is activated by an engine only clockwise. Rolling-on is used for obtaining fine filaments. It is only in this manner that the fibers of 0.01-0.02 mm in thickness may be produced. The running speed and rotation of the mandrel is strictly limited. A change in the running speed and rotation causes the density of polypropylene melt deposition to change drastically affecting the porosity of the fine milk filter. Nonobservance of the above parameters in the process of manufacture will result in a filter unsuitable for a high-quality filtration of raw milk.

The proposed filter element manufactured in the above manner may be installed at any type of milking equipment, provides a high quality purification of raw milk (improved grade of quality), is quick-changeable, extremely easy to maintain and inexpensive (not more than 2 kopeks per a liter of milk).

## Claims

1. A filter element for fine purification of raw milk, configured as a tubular cartridge made from a food-grade polymeric material formed by discrete rows of aerodynamically extruded fibers whose pore size decreases radially from the periphery towards the center, **characterized in that** each row comprises frame fibers and filter fibers, said filter fibers being thicker than said frame fibers.
